Europäisches Patentamt

European Patent Office

Office européen des brevets

(11) Publication number: **0 443 581 A2**

## EUROPEAN PATENT APPLICATION

(21) Application number: **91102551.8**

(22) Date of filing: **21.02.91**

(51) Int. Cl.⁵: **G09G 3/36**

(30) Priority: **23.02.90 JP 40924/90**

(43) Date of publication of application:
**28.08.91 Bulletin 91/35**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Nakamura, Nobutaka, c/o Intellectual**
**Property Div.**
**K.K. Toshiba, 1-1 Shibaura 1-chome,**
**Minato-ku**
**Tokyo 105(JP)**

(74) Representative: **Henkel, Feiler, Hänzel &**
**Partner**
**Möhlstrasse 37**
**W-8000 München 80(DE)**

(54) **Display control system.**

(57) In a computer (1) to which a gradation flat panel display device (6) is coupled, if data is output from the computer (1) after a color LCD device (5) or the like is coupled thereto in place of the gradation flat panel display device (6), a palette memory control circuit (2) checks whether or not the output data is palette data corresponding to a color to be displayed. If the output data is palette data, the output data is written in a palette memory (3). If the output data is display data for designating a color to be displayed, an LCD control circuit (4) reads out palette data from the palette memory (3) in accordance with the display data. Colors indicated by the read out palette data are displayed on the color LCD device (5).

F I G. 1

The present invention relates to a display control system.

A color CRT (cathode ray tube) display device has recently been used as a standard display device of a personal computer. A flat panel display device such as a plasma display (PDP) or a liquid crystal display (LCD) is used mainly for a personal computer of a laptop type in place of this color CRT display device. In a flat panel display device, which cannot perform color display, differences in color displayed on a color CRT display device are normally expressed by changes in gradation. Note that such a flat panel display device is called a gradation flat panel display device.

A color CRT display device can display a large number of colors. For example, if each of R, G, and B has 64 gradation levels (each having 6 bits; a total of 18 bits), 262,144 colors can be displayed. In contrast to this, a gradation flat panel display device can only perform gradation display by, for example, 16 gradation levels. In a gradation flat panel display device, therefore, when gradation display corresponding to 262,144 colors is to be performed, for example, a specific formula is used to automatically compute and select a gradation level, from the 16 gradation levels, which looks most natural in relation to a color to be displayed.

In the above-described case, since the 16 gradation levels can be displayed on the gradation flat panel display device, 4-bit data as display data is transmitted from the personal computer to the gradation flat panel display device. In such a computer system, even if a color LCD device is coupled to the personal computer in place of the gradation flat panel display device, display data to be transmitted from the personal computer to the color LCD device is 4-bit data. In this computer system, therefore, even if a color LCD device capable of displaying, for example, 512 colors, is used, only 16 colors can be displayed. That is, the performance of the color LCD device cannot be fully utilized.

Under these circumstances, in a computer system to which a gradation flat panel display device is coupled, demands have arisen for a display control system which can efficiently perform a display operation by a color LCD device when it is coupled to the computer in place of the gradation flat panel display device.

It is an object of the present invention to provide a display control system.

According to one aspect of the present invention, there is provided a display control system having a computer to which one of a color display device and a gradation display device is coupled, the computer for outputting display data and palette data corresponding to colors to be displayed in the color display device, the system comprising: palette memory means for storing the palette data output from the computer; memory control means for determining whether or not output data from the computer is the palette data, and writing the output data as the palette data into the palette memory means in accordance with a determination result; and display control means for receiving the display data from the computer, reading out the palette data from the palette memory means in accordance with the received display data, and controlling the color display device so as to display desired colors corresponding to the read out palette data.

According to another aspect of the present invention, there is provided a computer system to which an n(n is an integer)-gradation flat panel display device and an m(m is an integer, and n<m)-color flat panel display device capable of displaying m-colors are selectively connected, the system comprising: output means for outputting display data used for the n-gradation flat panel display device; palette means for storing color data representing n-colors of the m-colors and corresponding to the display data; and control means for receiving the display data from the output means, reading out the color data corresponding to the received display data from the palette means, and transferring the read out color data to the m-color flat panel display device.

This invention can be more fully understood from the following detailed description when taken in conjunction with the accompanying drawings, in which:

Fig. 1 is a block diagram showing an arrangement of a display control system according to an embodiment of the present invention;

Fig. 2 is a view for explaining a relationship between display data and palette data;

Fig. 3 is a flow chart for explaining an operation of a palette memory control circuit in Fig. 1; and

Figs. 4A and 4B are views showing vertical and horizontal synchronized signals used to determine palette data.

An embodiment of the present invention will be described below with reference to the accompanying drawings.

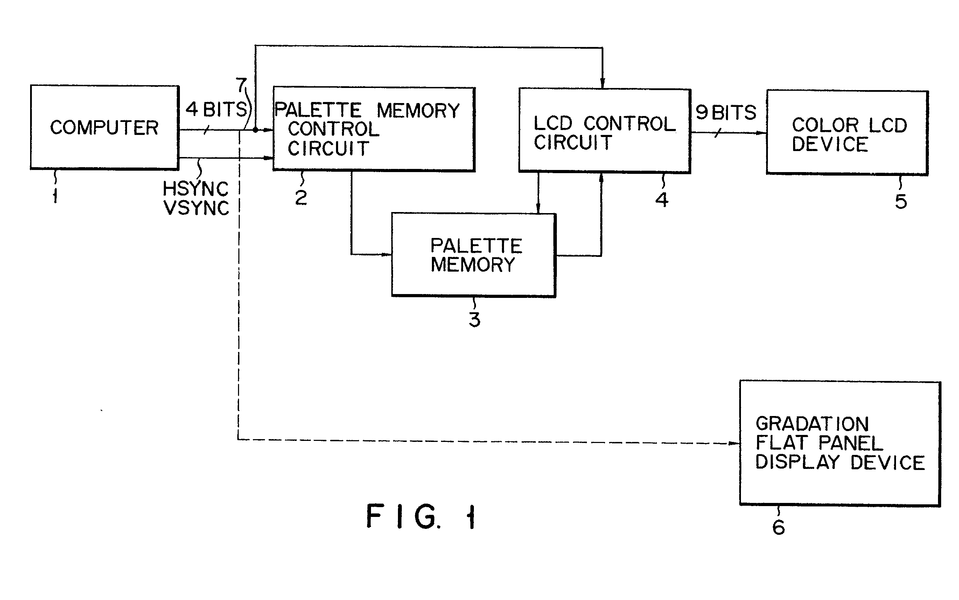

As shown in Fig. 1, in a computer system comprising a computer 1 and a gradation flat panel display device 6 coupled thereto, a display control system according to the embodiment of the present invention is constituted such that the gradation flat panel display device 6 is disconnected from the computer 1, and a palette memory control circuit 2, a palette memory 3, an LCD (liquid crystal display) control circuit 4, and a color LCD device 5 are coupled to the computer 1 in place of the gradation flat panel display device 6. Note that the gradation flat panel display device 6 is used to perform gradation display by display data from the computer 1.

The computer 1 outputs display data and palette data to the palette memory control circuit 2 and the LCD control circuit 4. Note that display data is used to designate a type of color to be displayed on the color LCD device 5, and palette data is used to display the color designated by the display data on the color LCD device 5.

The palette memory control circuit 2 performs control to write palette data from the computer 1 into the palette memory 3.

The palette memory 3 stores palette data under the control of the palette memory control circuit 2.

The LCD control circuit 4 reads out palette data corresponding to a color designated by display data output from the computer 1, from the palette memory 3, and performs display control of the color LCD device 5 in accordance with the read out palette data.

The color LCD device 5 is controlled by the LCD control circuit 4 to display a color indicated by palette data.

An operation of the display control system according to the embodiment of the present invention will be described below.

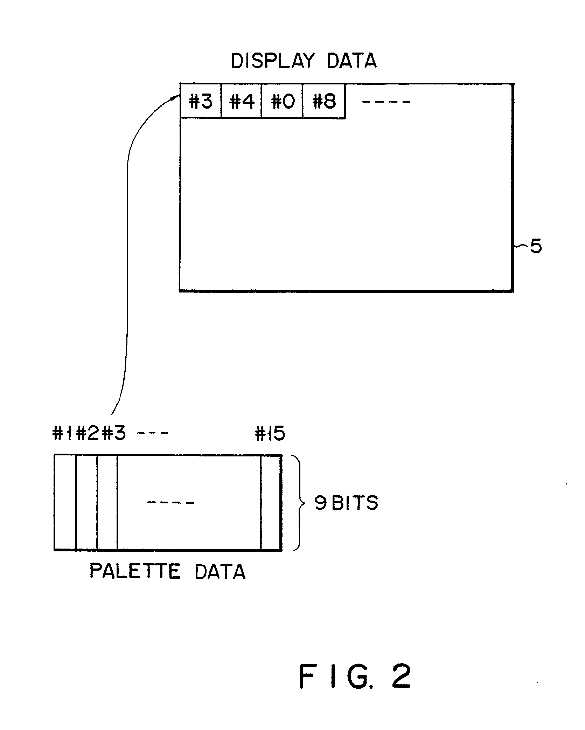

Assume that the color LCD device 5 is used in place of the gradation flat panel display device 6, as shown in Fig. 1. In this case, 4-bit display data and 9-bit palette data are output from the computer 1. As shown in Fig. 2, 9-bit palette data corresponding to 16 types of colors is designated by 4-bit display data (#0 to #15), and colors indicated by the palette data are displayed on the color LCD device 5. Note that 9-bit palette data is constituted by R, G, and B data each having 3 bits. Referring to Fig. 2, a color indicated by palette data designated by the display data #3 is displayed first. Subsequently, colors indicated by palette data designated by the display data #4, #0, and #8 are displayed sequentially.

If the color LCD device 5 capable of displaying 512 colors is used, since the palette memory 3 is only required to have a storage capacity of about 9 bits x 16 words, the palette memory 3 need not be used as an external memory and can be realized by an internal register of the display control circuit.

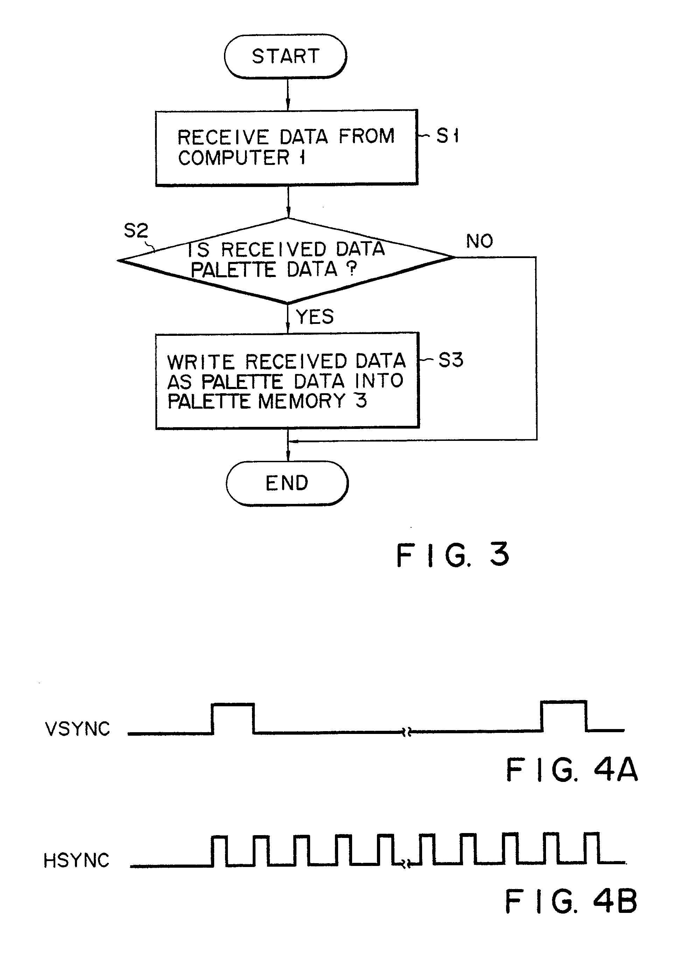

In the palette memory control circuit 2, processing shown in Fig. 3 is executed.

More specifically, when data is output from the computer 1, the data is received through a bus 7 (step S1), and it is checked whether or not the received data is palette data (step S2). Note that when palette data is to be written in the palette memory 3, the palette data is output to the same 4-bit bus 7 as that used to transmit display data because of the arrangement of the display control system shown in Fig. 1. For this reason, display data and palette data must be distinguished from each other.

As a data determining method, for example, the following method is used: a method in which data received during a vertical blanking period in the color LCD device 5 is regarded as palette data; or a method in which when data is received during a period in which the signal polarities of a vertical synchronized signal VSYNC and a horizontal synchronized signal HSYNC in the color LCD device 5 are both positive, as shown in Figs. 4A and 4B, the received data is regarded as palette data (see United States Application Serial No. 355,613).

If it is determined in step S2 that the received data is palette data, this data is written in the palette memory 3 as palette data.

If it is determined in step S2 that the received data is not palette data, i.e., the received data is display data, this data is not written in the palette memory 3. In the LCD control circuit 4, 9-bit palette data

corresponding to a color designated by 4-bit display data is read out from the palette memory 3, and the color indicated by the read out palette data is displayed on the color LCD device 5.

As has been described, according to the embodiment of the present invention, a large number of colors can be displayed. Note that since only palette data corresponding to 16 types of colors can be written in the palette memory, the palette data stored in the palette memory are updated if necessary.

**Claims**

1. A display control system characterized by comprising:

a gradation display device (6) for gradation-displaying display data;

a color display device (5) for color-displaying display data;

computer means (1) to which one of the color display device (5) and the gradation display device (6) is coupled and for outputting the display data and palette data corresponding to colors to be displayed on the color display device (5) when the color display device (5) is coupled to the computer means (1);

palette memory means (3) for storing the palette data output from the computer means (1);

memory control means (2) for determining whether or not output data from the computer means (1) is the palette data, and writing the output data as the palette data into the palette memory means (3) in accordance with a determination result; and

display control means (4) for receiving the display data from the computer means (1), reading out the palette data from the palette memory means (3) in accordance with the received display data, and controlling the color display device (5) so as to display desired colors corresponding to the read out palette data.

2. The system according to claim 1, characterized in that the output data is written as the palette data into the palette memory means (3) when the output data is palette data.

3. The system according to claim 2, characterized in that the output data is written as the palette data into the palette memory means (3) during a vertical blanking period in the color display device (5).

4. The system according to claim 2, characterized in that the output data is written as the palette data into the palette memory means (3) when vertical and horizontal synchronized signals have a desired polarity, respectively.

5. A display control system having a computer to which one of a color display device and a gradation display device is coupled, the computer for outputting display data and palette data corresponding to colors to be displayed on the color display device when the color display device is coupled to the computer, the system characterized by comprising:

    palette memory (3) means for storing the palette data output from the computer (1);

    memory control means (2) for determining whether or not output data from the computer (1) is the palette data, and writing the output data as the palette data into the palette memory means (3) in accordance with a determination result; and

    display control means (4) for receiving the display data from the computer (1), reading out the palette data from the palette memory means (3) in accordance with the received display data, and controlling the color display device (5) so as to display desired colors corresponding to the read out palette data.

6. The system according to claim 5, characterized in that the output data is written as the palette data into the palette memory means (3) when the output data is palette data.

7. The system according to claim 6, characterized in that the output data is written as the palette data into the palette memory means (3) during a vertical blanking period in the color display device (5).

8. The system according to claim 6, characterized in that the output data is written as the palette data into the palette memory means (3) when vertical and horizontal synchronized signals have a desired polarity, respectively.

9. A computer system to which an n(n is an integer)-gradation flat panel display device and an m(m is an integer, and n<m)-color flat panel display device capable of displaying m-colors are selectively coupled, the system characterized by comprising:

    output means (1) for outputting display data used for the n-gradation flat panel display device (6);

    palette means (3) for storing color data representing n-colors of the m-colors and corresponding to the display data; and

    control means (4) for receiving the display data from the output means (1), reading out the color data corresponding to the received display data from the palette means (3), and transferring the read out color data to the m-color flat panel display device (5).

10. The system according to claim 9, characterized in that the system further comprises:

    palette data output means (1) for outputting the
color data to be stored in the palette means (3);

    common transmission means (7) for transmitting the display data output from the output means (1) and the color data output from the palette data output means (1); and

    palette data control means (12) for determining whether data transmitted from the common transmission means (7) is the color data or the display data, and writing the color data output from the palette data output means (11) into the palette means (3) when the data is the color data.

11. The system according to claim 10, characterized in that the palette data output means (1) outputs to the color data during a vertical blanking period, and the palette data control means (2) determines that the data transmitted from the common transmission means (7) during the vertical blanking period is the color data.

12. The system according to claim 10, characterized in that the system further comprises synchronized signal output means (1) for outputting vertical and horizontal synchronized signals at a desired polarity when the palette data output means (1) outputs to the color data, and wherein the palette data control means (2) receives the vertical and horizontal synchronized signals, and determines that the data transmitted from the common transmission means (7) is the color data when the desired polarity is a predetermined polarity.

FIG. 1

EP 0 443 581 A2

DISPLAY DATA

| #3 | #4 | #0 | #8 | - - - - |

~5

#1 #2 #3 - - - #15

} 9 BITS

- - - -

PALETTE DATA

# FIG. 2

FIG. 3

FIG. 4A

FIG. 4B